(19) Europäisches Patentamt
European Patent Office
Office européen des brevets

(11) **EP 2 274 540 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **09741992.3**

(22) Anmeldetag: **24.04.2009**

(51) Int Cl.:
***F16H 63/32*** *(2006.01)*

(86) Internationale Anmeldenummer:
**PCT/EP2009/054954**

(87) Internationale Veröffentlichungsnummer:
**WO 2009/135774 (12.11.2009 Gazette 2009/46)**

(54) **SCHALTVORRICHTUNG MIT EINER ANORDNUNG ZUM AUSGLEICH VON LAGEABWEICHUNGEN**

SHIFTING DEVICE HAVING AN ARRANGEMENT FOR COMPENSATING FOR POSITIONAL DEVIATIONS

DISPOSITIF DE CHANGEMENT DE VITESSE POURVU D'UN SYSTÈME DE COMPENSATION D'ÉCARTS DE POSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.05.2008 DE 102008022239**

(43) Veröffentlichungstag der Anmeldung:
**19.01.2011 Patentblatt 2011/03**

(73) Patentinhaber: **Schaeffler Technologies GmbH & Co. KG**
**91074 Herzogenaurach (DE)**

(72) Erfinder:
• **FEUERBACH, Matthias**
**97070 Würzburg (DE)**
• **SCHWARZ, Uwe**
**91052 Erlangen (DE)**

(56) Entgegenhaltungen:
WO-A-2009/015936    DE-A1- 2 127 363
DE-A1- 10 126 438    DE-A1- 10 356 727
DE-A1- 19 926 248    FR-A- 1 482 014
JP-A- 2004 204 880

EP 2 274 540 B1

## Beschreibung

### Gebiet der Erfindung

Die Erfindung betrifft eine Schaltvorrichtung mit mindestens einer längsbeweglichen Schiebemuffe, mit zumindest einer Schaltgabel sowie mit mindestens einer Kompensationsanordnung, wobei die Schiebemuffe mittels der Schaltgabel zumindest zeitweise in wenigstens eine Längsrichtung verschiebbar ist und dabei die Schaltgabel über Gleitschuhe mit der Schiebemuffe im Berührkontakt steht und wobei die Kompensationsanordnung die Abweichungen eines Abstands zwischen einer zur Längsrichtung senkrecht verlaufenden Bezugsachse der Schaltgabel und zwischen dem zumindest punktförmigen Berührkontakt an der Schiebemuffe von einem Sollwert durch Abstandsausgleich zumindest teilweise kompensiert.

Ferner betrifft die Erfindung ein mit einer solden Schaltvorrichtung in Zusammenhang stehendes Verfahren zur Kompensation von Abweichungen der Position der Schaltgebel zur Schiebemuffe.

### Hintergrund der Erfindung

Gleitschuhe sind einteilige oder zusammengesetzte Bauteile, die entweder unmittelbar an die Schaltgabel angespritzt werden bzw. als vorgefertigte Einzelteile aufgesteckt, angeschraubt oder auf andere geeignete Weise befestigt werden. Die zusammengesetzten Bauteile sind oftmals durch Schweißen, beim Einsatz von Kunststoff zum Beispiel durch Ultraschallschweißen, miteinander verbunden.

Gleitschuhe der betrachteten Gattung sind vorzugsweise aus Kunststoff, können jedoch auch aus metallischem Werkstoff sein.

Es gibt Gleitschuhe, die an die Enden einer Schaltgabel geclipst sind. Andere Schaltgabeln weisen Gleitschuhe auf, die auf die Enden der Schaltgabel aufgeklebt, aufgeschrumpft oder aufgespritzt sind.

Schaltgabeln sind zwecks einfacher Herstellung häufig spanlos durch Ziehen, Stanzen und Prägen hergestellte Blechteile, die beispielsweise endseitig an den Gabelzinken rechteckige Querschnitte aufweisen oder dort L-, H-, U bzw. hohlprofilförmig ausgebildet sind.

Schaltgabeln sind Funktionselemente, mit denen in Schaltvorrichtungen Schaltbewegungen von beispielsweise Schaltschienen oder Schaltstangen an eine Schiebemuffe weiter gegeben werden. Die Schaltgabel steht in der Regel dauerhaft im Eingriff mit der Schiebemuffe und weist dazu zwei zueinander beabstandete Gabelzinken auf. Die enden der Gabelzinken liegen sich diametral an der Schiebemuffe gegenüber und weisen Gleitschuhe auf. Die Gleitschuhe sind auf dem Berührkontakt mit der Schiebemuffe gerichtet, und stehen mit dieser in der Regel dauerhaft im Berührkontakt im Eingriff.

Die Schiebemuffe weist in der Regel eine Umfangsnut oder alternativ einen Umfangsschlitz auf, in die/den die Enden Schaltgabel eingreifen. Die Schiebemuffe sitzt auf einer Getriebewelle. Die Schaltgabel ist relativ zur rotierenden Getriebewelle beziehungsweise zu rotierenden Schiebemuffe und parallel zur Rotationsachse der Getriebewelle längsbeweglich oder schwenkbar. Schwenken oder Längsverschieben der Schaltgabel führt, wenn die Schaltgabel im Berührkontakt mit der Schiebemuffe steht, zur Längsverschiebung der Schiebemuffe auf der Getriebewelle in die eine oder in die entgegengesetzte Längsrichtung.

Der in der Regel dauerhafte Eingriff der Schaltgabel in die Schiebemuffe führt zur Gleitreibung im Berührkontakt zwischen der Schaltgabel und der Schiebemuffe. Unter Berührkontakt wird der berührende Kontakt ohne Belastung oder unter Längsbelastung zwischen dem Gleitschuh und der Schiebemuffe verstanden. Dabei trifft zumindest eine punkt-, flächen- oder linienförmig ausgebildete Kontaktzone des Gleitschuhs auf eine Gegenkontaktzone an der Schiebemuffe.

Die Gleitschuhe sind Funktionselemente, die den Berührkontakt zwischen Schaltgabel und Schiebemuffe verschleißmindernd gestalten. Gleitschuhe sitzen, wie schon ausgeführt, an den freien Gabelenden der Schaltgabel, können aber auch an beliebigen anderen Abschnitten, zum Beispiel mittig zwischen den Gabelzinken am Körper der Gabel, ausgebildet sein.

Es gibt Schiebemuffen, mit denen nur in eine Richtung ein Gangrad beispielsweise für den Rückwärtsgang gekuppelt wird. In der Regel ist jeweils eine Schiebemuffe für das Schalten von zwei Gängen vorgesehen. In beiden Fällen wird die Schiebemuffe in zwei zueinander entgegengesetzte Längsrichtungen verschoben, welche mit der Rotationsachse der Getriebewelle, gleich längs gerichtet sind. Deshalb sind an dem jeweiligen Gleitschuh zwei Gleitflächen für den Kontakt mit einer Schiebemuffe ausgebildet. Die Gleitflächen sind voneinander weg und dabei in jede in eine zu anderen entgegengesetzte Längsrichtung gerichtet.

Gleitflächen sind die Flächen, die Kontaktzonen aufweisen, mit denen die Gleitschuhe zumindest beim Schalten im Berührkontakt mit einem entsprechenden Gegenkontakt an der Schiebemuffe stehen. Der Berührkontakt zwischen Gleitschuh und Schiebemuffe kann punktförmig, aus mehreren Kontaktpunkten zusammengesetzt, linienförmig beziehungsweise flächenförmig ausgebildet sein.

Häufig sind Gleitschuhe bezüglich der Lage ihrer Gleitflächen zueinander und bezüglich der Oberflächenkontur der Gleitflächen symmetrisch ausgebildet, so dass einer Kontaktzone an der einen Gleitfläche in Längsrichtung auf gleicher Höhe eine andere Kontaktzone an der anderen abgewandten Gleitfläche gegenüberliegt.

Die Erfindung betrifft die Gattung der Gleitschuhe, die über ein Anschlussstück zumindest abschnittsweise an der Schaltgabel abgestützt sind. Das Anschlussstück im Sinne der Erfindung ist beispielsweise ein einteilig mit dem Gleitschuh ausgebildeter Zapfen, wie dieser beispielsweise in DE 103 56 727 A1 oder gattungs bildenden DE 21 27 363 A1 beschrieben ist. Der Gleitschuhe sind mit dem Zapfen entweder um die Zapfenachse schwenkbar oder sind fest eingepresst an der Schaltgabel befestigt.

Anschlussstücke sind beispielsweise auch Verbindungselemente wie Schrauben nach FR 1,482, 014, die in entsprechende Löcher am Gleitschuh und an der Schaltgabel eingreifen. Der Eingriff des Anschlussstücks beziehungsweise das Anschlussstück selbst sind soweit symmetrisch ausgebildet, dass zumindest die Kontaktflächen der Aufnahme zwischen Schaltgabel und Gleitschuhe zu einer Symmetrieachse des Anschlussstücks beziehungsweise zu der Symmetrieachse der Aufnahme symmetrisch ausgebildet sind. Diese Symmetrieachse verläuft insbesondere bei schwenkbeweglich aufgenommenen Gleitschuhen quer zu den Längsrichtungen.

Die Erfindung betrifft auch die Gattung Gleitschuhe, die auf das Ende der Schaltgabel oder an anderer Stelle der Schaltgabel aufgesteckt sind. Dieser Typ Gleitschuhe ist entweder einteilig ausgebildet und weist eine Einstecköffnung auf oder ist mehrteilig ausgebildet. In die Einstecköffnung wird zum Beispiel das Ende der Schaltgabel eingesteckt. Mehrteilige Gleitschuhe werden miteinander verclipst oder die Einzelteile des Gleitschuhes werden separat jedes für sich an der Schaltgabel befestigt.

Funktionselemente wie Schaltgabeln und Schiebemuffen müssen sehr genau zueinander oder zu anderen Funktionselementen angeordnet und ausgerichtet sein, um die Funktion des jeweiligen Getriebeelements in einem Fahrzeuggetriebe zu gewährleisten. Da die Anordnungen häufig aus verschiedenen miteinander verbundenen Bauteilen bestehen, ist die Lage einzelner Elemente zueinander auf Grund der Summe der einzelnen Abweichungen oft nicht oder nur unter hohem Aufwand einzuhalten. Das liegt an den fertigungsbedingten Abweichungen der Abmessungen der Einzelteile vom Sollwert (Nennmaß). Weiterhin weichen auch die Positionen der einzelnen in der Anordnung aneinander befestigten Elemente zueinander montagebedingt vom Sollwert ab. Das führt in einer Anordnung wie der betrachteten Schaltvorrichtung zur Verschiebung gegeneinander beweglicher Bauteile in dem Maße, dass die Funktionssicherheit gefährdet sein kann, wenn diese Summe der Abweichungen nicht kompensiert wird.

Es ist ein spannungsfreien Eingriff der Gabelenden in die Schiebemuffe abzusichern. Damit soll vorzeitiger Verschleiß am Gleitschuh vermieden werden. Außerdem wird über diesen Abstand auch die Schaltstellung der Schiebemuffe im System mitbestimmt und somit die Präzision von Schaltvorgängen maßgeblich beeinflusst. Die Lage der Elemente zueinander muss deshalb an einer oder mehreren Stellen korrigiert werden, dass heißt die Abweichungen von der Lage müssen kompensiert werden.

Die Abweichungen von der Ideallage unterscheiden sich von Fertigungslos zu Fertigungslos und auch innerhalb eines Fertigungsloses. Der Sollwert ist beispielsweise durch den Abstand einer Bezugsachse der Schaltgabel zur Schiebemuffe definierbar, wenn diese sich über den Gleitschuh in einem möglichst lastfreien Zustand am Berührkontakt berühren. Die Bezugsachse kann bauteilund losabhängig unterschiedliche vom Sollwert/Nennmaß abweichende Positionen zu der Schiebemuffe einnehmen. Die Montage eines Gleitschuhs ohne Kompensation hätte möglicherweise zur Folge, dass die Anordnung verspannt oder mit zuviel Spiel versehen ist.

Es werden in diesen Fällen bauliche Kompromisse eingegangen, die zu Funktions-, Komfort und/oder Qualitätsverlusten in der Schaltung führen können oder die zu vorzeitigen Verschleiß führen. Um das zu vermeiden, muss erhöhter Aufwand bei der Herstellung der Einzelteile und deren Montage und Justierung betrieben werden. Die Kosten für Herstellung und Montage sind entsprechend hoch.

Die Lageabweichung der Schaltgabel zur Schiebemuffe von dem Sollwert entspricht einer Differenz aus dem Abstand der Bezugsachse in der Sollposition und dem tatsächlichen Abstand, den die Bezugsachse zur Gegenkontaktzone an der Schiebernuffe also zum Berührkontakt aufweist, wenn diese sich in der Schaltvorrichtung berühren. Dieser Abstand kann mit dem Abstand gleichgesetzt werden, den die Kontaktzone zu der Bezugsachse einnimmt - denn, die Kontaktzone weist während des Berührkontakts immer den gleichen Abstand zu Bezugsachse auf wie der Berührkontakt zu Bezugsachse. Die Abweichung des Abstands vom Sollwert sollte deshalb möglichst ausgeglichen werden. Oft ist die Position der Gleitschuhe zu einer Bezugslinien mit hoher Genauigkeit nur durch spanabhebende Nacharbeit beispielsweise an den Gleitschuhen realisierbar, die dafür anfangs mit einem entsprechenden Übermaß für die Korrektur versehen sind. Spanabhebende Nacharbeit ist teuer.

DE 101 26 438 A1 zeigt eine Schaltvorrichtung, in der die Lage der Schaltgabel zur Schiebemuffe bei der Montage der Schiebemuffe an der Schaltschiene beziehungsweise Schaltwelle korrigiert werden kann. Der Ausgleich der Lage der Schaltgabel wird relativ zu einer Bezugsachse vorgenommen, die beispielsweise fix zur Schaltschiene/Schaltstange ist. Dazu wird die Schaltgabel relativ zur Bezugsachse auf der Schaltschiene um ein vorher ermitteltes Korrekturmaß in eine Sollposition zur Bezugsachse verschoben und dann befestigt. Dazu weist die Schaltgabel eine auf der Schaltschiene verschiebbare Nabe auf. Die Schaltschiene ist mit einem Schiebesitz für die Nabe versehen. Der Schiebesitz ist mindestens um das größtmögliche Korrekturmaß für die Lagekorrektur größer als die Breite der Nabe. Die Nabe wird erst formschlüssig auf der Schaltschiene fixiert, wenn die Korrektur erfolgt ist.

Die nachveröffentlichte WO 2009/015936 A zeigt eine Schaltgabel, bei der die Lageabweichungen teilweise ausgeglichen sind.

## Zusammenfassung der Erfindung

Die Aufgabe der Erfindung ist es daher, eine Schaltvorrichtung und ein mit dieser in Zusammenhang Stehendes Montageverfahren zu schaffen, mit der Form- und Lageabweichungen am Eingriff der Schaltgabel in eine Schiebemuffe einfach und kostengünstig sehr genau ausgeglichen werden können.

Die Aufgabe wurde durch eine Schaltvorrichtung mit den Merkmalen des Anspruchs 1 bzw, durch ein mit der Schaltvorrichtung gem. Anspruch 1 in Zusammenhang stehendes Verfahren gem Anspruch 10 gelöst.

Mit der Erfindung wurde eine Möglichkeit geschaffen Lageabweichungen der Schaltgabel zur Schiebemuffe auszugleichen. Dies wird durch wenigstens zwei Gleitflächen an dem jeweiligen Gleitschuh möglich, die zunächst nach der Herstellung des Gleitschuhes als Einzelteil an dem Gleitschuh beide konstruktiv für eine denselben Berührkontakt mit der Schiebemuffe vorgesehen sind. Jedoch unterscheiden sich die Gleitflächen dadurch, dass jede der Kontaktzonen einen anderen Abstand zur Bezugsachse aufweist. Mindestens eine der Kontaktzonen weist dabei einen Abstand zur Bezugsachse auf, in dem außer dem Sollwert des Abstands auch noch eine mögliche Abweichung vom Sollwert berücksichtigt ist. Damit kann der Abstand, den diese Kontaktzone zur Bezugsachse einnimmt, größer oder kleiner sein als der Sollwert. Eine andere der Kontaktzonen kann aber auch einen Abstand zur Bezugsachse aufweisen, dessen Wert dem Sollwert entspricht.

Welche der Gleitflächen bzw. welche der Kontaktzonen an den Gleitflächen in der fertig montierten Schaltvorrichtung letztendlich für den Berührkontakt mit der Schiebemuffe auf die Schiebemuffe ausgerichtet ist, wird vor oder bei während der Montage der Schaltvorrichtung festgelegt. Dazu wird alternativ die tatsächliche Abweichung stichprobenartig pro Fertigungslos oder die tatsächliche Abweichung vom Sollwert separat für jede Vorrichtung einzeln ermittelt. Anhand des tatsächlich ermittelten Wertes wird der Gleitschuh danach an die Schaltgabel montiert oder mit derjenigen Kontaktzone auf den Berührkontakt ausgerichtet, in deren Abstand ein Korrekturwert berücksichtigt ist. Dieser Korrekturwert liegt der zuvor ermittelten tatsächlichen Abweichung vom Sollwert am nächsten oder entspricht dieser im Idealfall.

Die Erfindung macht es möglich, Schaltvorrichtungen der Gattung einfacher und kostengünstiger genau zu montieren, so dass die anfangs beschriebenen Nachteile, wie das gegenseitiges ungewollte Verspannen der Bauteile, in der Vorrichtung vermieden wird. Die Gleitschuhe oder einzelne Teile von Gleitschuhen sind als Einzelteile, die die entsprechenden Korrekturwerte aufweisen, kostengünstig in Werkzeugen mit vielen Kavitäten herstellbar. Die Kompensation oder Korrektur von Lageabweichungen ist im Einzelfall auch durch Montage der Gleitschuhe erst an dem schon ansonsten fast fertig montierten Fahrzeuggetriebe und auch im Reparaturfall möglich.

Der Gleitschuh weist mindestens drei aber vorzugsweise auch vier und möglicherweise noch mehr der Gleitflächen und somit Kontaktzonen auf, die alle zunächst für ein und denselben Kontakt mit der Schiebemuffe vorgesehen sind, von denen aber durch die Korrektur in der Schaltvorrichtung nur eine Gleitfläche der entsprechenden Gegenkontaktzone für den Berührkontakt gegenüberliegt. Die anderen Gleitfläche sind somit im Fahrzeugbetrieb ohne Kontakt mit der Schaltgabel, oder zweckmäßigerweise, in eine andere Richtung ebenfalls auf eine weitere Gegenkontaktzone für den Berührkontakt beim Schalten in den anderen Gang bzw. für das Herausnehmen des Ganges gerichtet. Gleichzeitig oder alternativ dazu werden verschiedene Fertigungslose von Gleitschuhen gefertigt. In jedem der Lose ist eine andere oder sind mehrere andere mit statistisch hoher Wahrscheinlichkeit auftretende der Abweichungen vom Sollwert berücksichtigt. Somit steht eine größere Auswahl an Kompensationsmöglichkeiten zur Verfügung und die jeweilige Anordnung kann insgesamt genauer montiert werden.

Das Verfahren für die Montage der Gleitschuhe sieht deshalb ff. Schritte vor:

a. Bestimmung möglicher Lageabweichungen der Schaltgabel zur Schiebemuffe anhand von Maßaufzeichnungen oder anhand von Stichproben. Einzelmessungen an einzelnen Funktionselementen und Baugruppen - alternativ können diese Abweichungen auch empirisch festgelegt werden;

b. Herstellung von Gleitschuhen mit mindestens zwei in andere Richtung gerichteten Kontaktzonen. Dabei weist jeder Gleitschuh des Fertigungsloses eine erste Kontaktzone auf, deren Abstände zur Bezugsachse sich innerhalb enger Maßgrenzen untereinander kaum unterscheidet;

c. Herstellung mindestens eines weiteren Fertigungsloses mit ersten und zweiten Kontaktzonen, deren Abstände anders sind als die des Fertigungsloses nach b;

d. Ermittlung der tatsächlichen Abweichung eines ersten Abstandes der Bezugsachse der Schaltgabel zum zukünftigen Berührkontakt an der Schiebemuffe;

e. Auswahl des Gleitschuhes aus einem der Fertigungslose, in deren Abstand die ermittelte tatsächliche Abweichung mit einem Korrekturwert berücksichtigt ist, der der tatsächlichen Abweichung von Sollwert des ersten Abstands am nächsten liegt oder sogar mit dieser übereinstimmt;

f. Richtungsorientierte Montage des Gleitschuhes, indem die Kontaktzone auf den späteren Berührkontakt gerichtet ist, in deren Abstand ein Korrekturwert berücksichtigt ist, welcher der zuvor ermittelten tatsächlichen Abweichung am nächsten liegt oder im Idealfall diesem sogar entspricht;

Mit einer Ausgestaltung der Erfindung ist vorgesehen dass zumindest die Bereiche, mit denen das Anschlussstück an der Schaltgabel abgestützt ist, zur Symmetrieachse beispielsweise einer Steckverbindung rotationssymmetrisch ausgebildet sind. Die Symmetrieachse entspricht der Bezugsachse. Die Aufnahme ist bevorzugt innen- oder außenzylindrisch. Ein Zapfen ist bevorzugt außenzylindrisch. Die zylindrische Flächen können jedoch auch unterbrochen sein. Wichtig ist, dass die stützenden Abschnitte des Anschlussstückes beziehungsweise der Aufnahme rotationssymmetrisch, also zumindest Teile von den jeweiligen zylindrischen Flächen sind.

Anschlussstücke sind alle Elemente, wie Zapfen von Steckverbindungen, also auch Einsicköffnungen oder Schrauben, Stifte oder ähnliches, die entweder am Gleitschuh fest sind und die in oder auf die Schaltgabel gesteckt werden oder die an der Schaltgabel fest sind und auf die die Gleitschuhe gesteckt werden.

Eine weitere Ausgestaltung der Erfindung sieht vor, dass das Anschlussstück und dessen korrespondierende Aufnahme achssymmetrisch zur geometrischen Achse/Symmetrieachse/Bezugsachse ausgebildet sind. Ein zapfenartig ausgebildetes Anschlussstück kann zum Beispiel mehreckig sein. Die Innenkontur der Aufnahme korrespondiert dann entsprechend mit dieser Form. Die Anschlussstücke und/oder die Aufnahmen können beispielsweise rhombenförmige Querschnitte aufweisen.

Die Erfindung betrifft auch zapfenartige Anschlussstücke und deren Aufnahmen sowie Gleitschuhe, deren Querschnitt quadratisch ist.

Die Erfindung betrifft auch Anschlussstücke und deren Aufnahmen sowie Gleitschuhe mit rechteckigem Querschnitt.

Die Erfindung betrifft auch Anschlussstücke und deren Aufnahmen sowie Gleitschuhe mit elliptischen Querschnitt.

Die Erfindung betrifft auch Anschlustücke und/oder deren Aufnahmen sowie Gleitschuhe, die im Querschnitt geradzahlige (konkave oder konvexe) Vielecke mit mehr als vier Ecken sind. Beispiele sind Sechsecke, Achtecke, Sterne usw.

Die Erfindung betrifft auch die Abschnitte des Anschlussstücks oder der Aufnahme, die in sich oder in gerader Anzahl paarweise zueinander punktsymmetrisch zur Symmetrieachse ausgerichtet sind.

**Beschreibung der Zeichnungen**

Die Erfindung wird nachfolgend anhand von Ausführungsbeispielen näher erläutert.

Figur 1        zeigt eine schematisch und nicht maßstäblich dargestellte Schaltvorrichtung,

Figur 1a       das Detail Z aus Figur 1 stark vergrößert und nicht maßstäblich, mit dem der Kontakt zwischen dem Gleitschuh und der Schiebemuffe schematisiert dargestellt ist,

Figur 2        zeigt eine Ansicht der Schiebemuffe aus der Schaltvorrichtung nach Figur 1,

Figur 3        zeigt ein Ausführungsbeispiel einer Schaltgabel aus einer erfindungsgemäßen Schaltvorrichtung, beispielsweise aus der nach Figur 1, als Gesamtansicht,

Figur 4        zeigt einen Gleitschuh, der für die Befestigung an einer Schaltgabel, wie an der nach Figur 3 vorgesehen ist,

Figuren 5 bis  8 zeigen verschiedene Ausführungen von Gleitschuhen verschieden ausgerichtet,

**Detaillierte Beschreibung der Zeichnungen**

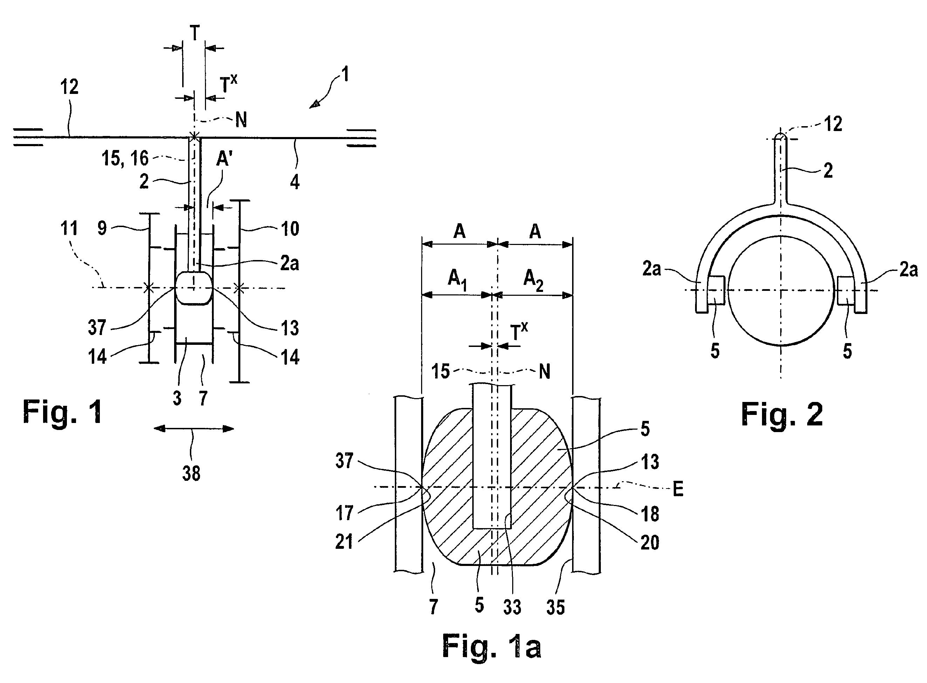

Figur 1 zeigt eine stark vereinfachte skizzenhafte Seitenansicht einer Schaltvorrichtung 1 mit einer Schaltgabel 2 und einer Schiebemuffe 3. Die Schaltgabel 2 ist in Figur 2 Frontalansicht schematisch abgebildet. Die Schaltgabel 2 ist an einer Schaltschiene 4 fest und weist zwei Gabelenden 2a auf. An jedem Gabelende 2a ist ein Gleitschuh 5 fest und greift in eine Nut 7 an der Schiebemuffe 3 ein. Die Schiebemuffe 3 ist zwischen zwei Gangrädern 9 und 10 angeordnet.

Die Schaltschiene 4 ist entlang der Längsachse 12 wahlweise in die eine oder andere Richtung längsverschiebbar nimmt dabei die Schaltgabel 2 mit. Die Längsachse 12 verläuft parallel zur Längsmittelachse 11 der Schiebemuffe 3. Die Schiebemuffe 3 wird durch Verschieben der Schaltgabel 2 längs entlang der Längsmittelachse 11 in die eine oder andere mit dem Doppelpfeil 38 markierte Längsrichtung mitgenommen und so mit der Verzahnung 14 einer der Gangräder 9 oder 10 gekuppelt. Dabei wird die Schiebemuffe 3 über den jeweiligen Gleitschuh 5 im Berührkontakt 13 bzw. Berührkontakt 37 beaufschlagt.

In der Darstellung nach Figur 1 stehen die Schaltgabel 2 und die Schiebemuffe 3 in einer Neutralstellung N, in der weder das Gangrad 9 noch das Gangrad 10 geschaltet sind. Der Eingriff der Gleitschuhe 5 in die Nut 7 sollte in dieser Position möglichst frei von Belastungen sein. Die Bezugsachse 15 der Schaltgabel 2 und die Bezugsachse 16 der Schiebemuffe 3 sollten auf der im Bild vertikalen Achse N in Nennlage und deshalb aufeinander liegen oder diese schneiden. In diesem Fall sind die Abstände A von der Bezugsachse 15 aus in beide Längsrichtungen zu den jeweiligen Berührkontakt 13 oder 37 einander gleich.

Die größtmöglichen Abweichungen entweder der Bezugsachse 15 oder der Bezugsachse 16 von der Nennlage N sind durch das Maß T symbolisiert. Die tatsächliche Position der Schiebemuffe 5 oder der Schaltgabel 2 kann somit vom Nennwert maximal um das Maß T abweichen bzw. Schiebemuffe 5 und Schaltgabel 2 können maximal um dieses Maß zueinander versetzt sein. Dieser Versatz kann in Neutralstellung der Schaltgabel zwischen zwei Gängen zu Verspannungen in der Anordnung führen, wodurch beispielsweise die Gleitschuhe 5 ständig unter Last stehen und am Berührkontakt 13 oder 37 vorzeitig verschleißen.

Der Berührungskontakt zwischen einer oder mehr Kontaktzone(n) 20 des Gleitschuhs 5 und der Gegenkontaktzone(n) 18 an der Schiebemuffe 3 ist punktförmig, alternativ linienförmig oder flächenförmig ausgebildet. In Figur 1a ist der Berührkontakt 13 der Kontaktzone 20 eines Gleitschuhs 5 mit der Gegenkontaktzone 18 an einer Flanke 35 in der Nut 7 der Schiebemuffe 3 stark vergrößert und in einer Seitenansicht nicht maßstäblich dargestellt. Die Kontaktzone ist die Zone, an der sich die Materialien von Gleitschuh und Schiebemuffe am Berührkontakt unmittelbar berühren. Die Kontaktzone 20 ist in dem nach Figur 1 dargestellten Beispiel beispielsweise punktförmig, ellipsenförmig oder ist eine Kreisfläche.

Bei Betätigungskräften an der Schaltgabel 2 in die Gegenrichtung kommt die Kontaktzone 21 in Kontakt mit einer Gegenkontaktzone 17. Die Lage von Schaltgabel 2 und Schiebemuffe 3 zueinander ist zumindest dadurch teilweise ausgleichbar, dass an jedem Gleitschuh 5 die zwei Kontaktzonen 20 und 21 ausgebildet sind, die jeweils wahlweise bei der Montage entweder auf den Gegenkontakt 17 oder 18 ausrichtbar sind.

Der Gleitschuh 5 ist auf dass Schaltgabelende 2a gesteckt. Dazu weist jeder Gleitschuh 5 ein innenzylindrisches Loch 33 auf, in das das außenzylindrische Schaltgabelende 2a gesteckt ist. Das Loch 33 ist abweichend von der Symmetrie nicht mittig zwischen den Kontaktzonen 20 und 21 eingebracht, sondern mit dem Versatz $T^x$ zu N, so dass $T^x$ in diesem Fall ideal auch ein dem Versatz identischer Korrekturwert ist.

Jede der Kontaktzonen 20 und 21 ist für den Kontakt mit ein und der selben Gegenkontaktzone 17 oder 18 ausgebildet. Dazu liegen die Kontaktzonen 20 und 21 in einer gemeinsamen Ebene E. Alternativ ist jede der Kontaktzonen 20 und 21 für den Kontakt mit der Gegenkontaktzone 18 ausgebildet. Jede der Kontaktzonen 20 und 21 ist durch Drehung des Gleitschuhs um die Bezugsachse 15 um 180° wahlweise auf die Gegenkontaktzone 17 beziehungsweise 18 ausrichtbar. Die Mittelachse der Steckverbindung liegt auf der Bezugsachse 15. Wie aus Figur 1a hervorgeht, ist die Mittelachse nicht symmetrisch zwischen den Kontaktzonen 20 und 21 angeordnet, sondern die Abstände $A_1$ und $A_2$ sind zueinander ungleich. Der Gleitschuh 5 ist so ausgelegt, dass die Kontaktzone 20 entweder auf die Gegenkontaktzone 18 an der Flanke 35 in der Nut 7 der Schiebemuffe 3 oder in entgegengesetzte Richtung auf die Gegenkontaktzone 17 ausgerichtet werden kann.

In dem Beispiel nach Figur 1 und Figur 1a ist die Kontaktzone 20 auf die Gegenkontaktzone 18 gerichtet. Dagegen ist die Kontaktzone 21 in entgegengesetzte Richtung auf die Gegenkontaktzone 17 gerichtet. In der montierten Schaltvorrichtung weicht die Position der Bezugsachse 15 beispielsweise um den Korrekturwert $T^x$ von der Nennlage N ab. Der Wert $T^x$ ist ein Korrekturwert, der bei Herstellung des Gleitschuhe 5 in den Maßen $A_1$ und $A_2$ beabsichtigt ausgeführt wird. Dieser Korrekturwert ist in diesem Fall so im Abstand $A_2$ berücksichtigt.

$$A_2 = A + T^X \text{ und } A_1 = A - T^X$$

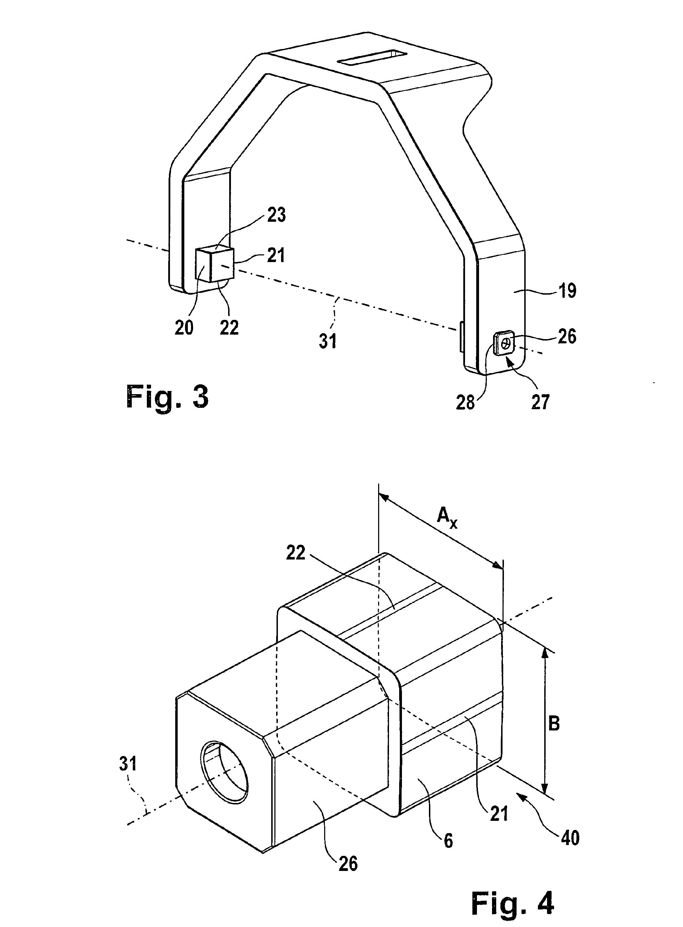

Figur 4 zeigt einen Gleitschuh 40 in einer Gesamtansicht. Der Gleitschuh 40 weist einen Grundkörper 6 auf, mit dem einteilig ein Zapfen 26 verbunden ist. Am Grundkörper 6 sind vier Kontaktzonen 20, 21, 22 und 23 ausgebildet, von denen in der Darstellung nach Figur 4 nur die Kontaktzonen 21 und 22 sichtbar und die Kontaktzonen 20 und 23 jedoch verdeckt sind. Der Zapfen 26 ist für eine Steckverbindung 27 an einem Grundkörper 19 beispielsweise für eine Schaltgabel 2 vorgesehen. Der Grundkörper 19 mit Gleitschuhen 40 in einer Hauptansicht in Figur 4a dargestellt. Der Grundkörper 19 ist für die jeweilige Steckverbindung 27 mit einem Vierkantloch 28 versehen, dessen Innenabmessungen mit den Außenabmessungen des Zapfens 26 korrespondieren. Die Steckverbindung lässt Drehungen des Gleitschuhs 5 in 90° - Stufen um die Bezugsachse 31 zu.

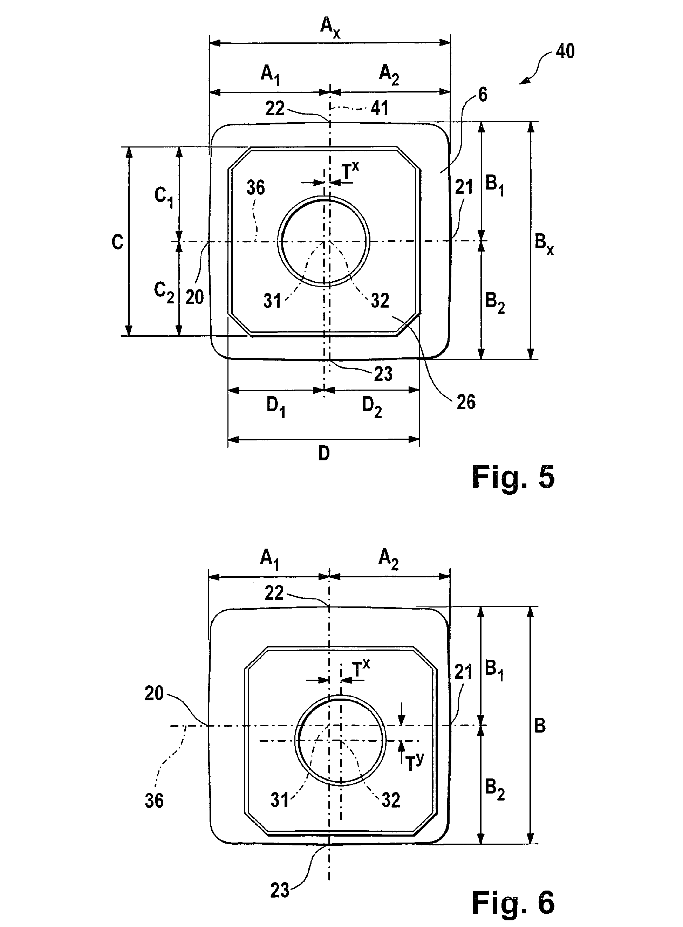

Der Zapfen 26 ist ein Vierkant und in einer in Figur 5 dargestellten Ausführungsvariante bezüglich der in Figur 5 im Bild senkrechten Bezugsachse 31 symmetrisch. Die Seitenlänge $C_1$ und $C_2$ sind gleich und begrenzen somit im Querschnitt ein Quadrat. Wäre der Gleitschuh 5 insgesamt symmetrisch ausgebildet, wäre der Grundkörper 6 auch als symmetrischer Vierkant ausgebildet, d.h. die Seitenlängen A und B wären gleich lang. Außerdem müsste die Bezugsachse 32 des Grundkörpers 6 auf der Bezugsachse 31 des Zapfens 26 liegen. Der Gleitschuh 40 gemäß Erfindung sieht alternativ jedoch folgende Gestaltungen vor:

Figur 5 Die in Betrachtungsrichtung die Bildebene senkrecht durchstoßende Bezugsachse 31 in der Steckverbindung 27 nach Figur 3 ist gleichzeitig Symmetrieachse des Zapfens 26. Die Achse 31 und die geometrische Achse 32 des Grundkörpers 6 verlaufen parallel und sind um das Maß $T^x$ voneinander entfernt, das heißt, sie liegen nicht aufeinander. Die Symmetrieebene 36 ist Mittelebene des Zapfens 26 und teilt diesen in Abschnitte mit zueinander gleichen Längenmaßen $C_1$ und $C_2$.

Figur 6 Die in Betrachtungsrichtung die Bildebene senkrecht durchstoßenden Bezugsachsen 31 des Zapfens 26 und die geometrische Achse 32 des Grundkörpers 6 liegen in mit der Symmetrieebene 36 gleichgerichtete Richtung um das Maß $T^x$ voneinander entfernt - jedoch liegt die geometrische Achse 32 nicht in der Symmetrieebene 36, so dass die geometrische Achse 32 mit dem Maß $T^y$ zueinander beabstandet sind.

Für beide zuvor genannten Ausführungen des Gleitschuhs 5 gilt außerdem alternativ oder gleichzeitig:

Die Abstände $A_1$ bzw. $B_1$ und $A_2$ bzw. $B_2$ einer Seite bzw. von Seite zu Seite des Grundkörpers 6 sind zueinander gleich oder unterscheiden sich voneinander. Ax kann gleich oder ungleich Bx sein. Die Abstände $D_1$ und $D_2$ am Zapfen 26 unterscheiden sich untereinander oder sind zueinander gleich. Die Abstände $C_1$ und $C_2$ unterscheiden sich voneinander oder sind gleich groß. Der Querschnitt des Zapfens 26 ist ein Quadrat, denn die Abstände C und D sind gleich. Die Abstände $A_1$ und $A_2$ sind Abstände in der Ebene 36 zur geometrischen Achse 32. Die Abstände $B_1$ und $B_2$ sind Abstände in der Ebene 41 zur geometrischen Achse 32. Die Ebene 41 durchdringt die Ebene 36 rechtwinklig. $D_1$ und $D_2$ sind jeweils Abstände von der Bezugsachse 31 zum Kontakt in der Ebene 36 mit dem Vierkantloch in dem Grundkörper der Schaltgabel 19.

Die Kontaktzonen 20 und 21 liegen in der Ebene 36 und sind voneinander weg gewandt und die Kontaktzonen 22 und 23 liegen in der Ebene 41 und sind voneinander weg gewandt. Die Abstände der Kontaktzonen 20 und 21 mit Korrekturwert von der Bezugsachse 31 ergeben sich in der Ebene 34 zum einen aus dem Abstand $T^x$ zwischen den Achsen 31 und 32 und zum anderen eventuell zusätzlich noch aus dem Unterschied von $A_1$ zu $A_2$. In dem Fall, indem der Gleitschuh 40 in Figur 5 um die Bezugsachse 31 um 90° gedreht wird und damit die Kontaktzonen 22 bzw. 23 auf dem Berührkontakt gerichtet sind, ergeben sich unterschiedliche Abstände der Kontaktzonen 22 und 23 mit Korrekturwert dann, wenn die Abstände $C_1$ und $C_2$ und/oder die Abstände $B_1$ und $B_2$ nicht gleich sind. Der Korrekturwert ist dann durch die Differenzen der einzelnen Abstände aber nicht durch einen Versatz von Achsen bestimmt, da auch die geometrische Achse 32 wie die Bezugsachse 31 in der Ebene 36 verläuft. In dem anderen Fall nach Figur 6 ist der Korrekturwert auch teils zusätzlich noch von dem Versatz $T^I$ abhängig.

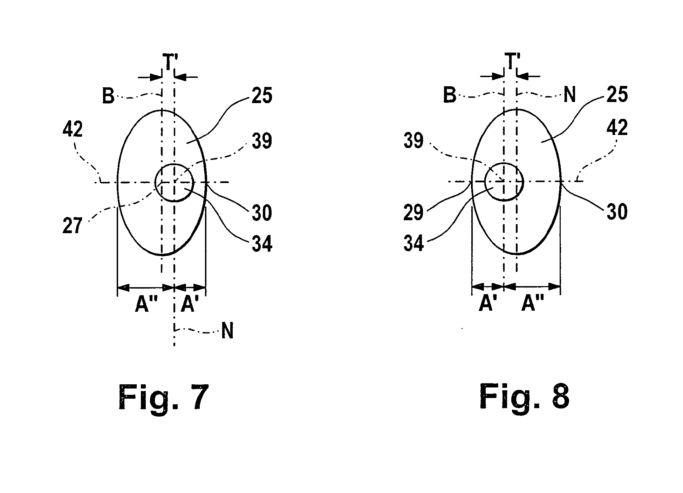

Die Figuren 7 und 8 zeigen schematisch einen Gleitschuh 24 mit einem außen zylindrisch ausgebildeten Zapfen 34 und einen im wesentlichen elliptisch ausgebildeten Grundkörper 25. Die senkrecht ins Bild hinein verlaufende Symmetrieachse bzw. Bezugsachse 39 des Zapfens 33 und die zur Bezugsachse 39 parallele Bezugsachse 42 des Grundkörpers 25 liegen gemeinsam in der Symmetrieebene 26 des Zapfens 34 aber voneinander um den Abstand $T^I$ voneinander entfernt. Die im wesentlichen ovalen Gleitschuhe 24 weisen zwei voneinander weisende Kontaktzonen 29 und 30 auf, die durch Drehung des Gleitschuhs 24 um die Bezugsachse 39 auf ein und die selbe Kontaktstelle gerichtet werden können, so dass sich durch Drehung des an die Schaltgabel montierten oder montierbaren Gleitschuhes 24 um die Bezugsachse 39 die Abstände $A^I$ oder $A^{II}$ zum Berührkontakt einstellen lassen.

**Bezugzeichen**

1 Schaltvorrichtung

2 Schaltgabel

2a Schaltgabelende

3 Schiebemuffe

4 Schaltschiene

5 Gleitschuh

6 Grundkörper

7 Nut

8 nicht vergeben

9 Gangrad

10 Gangrad

11 Längsmittelachse

12 Längsachse

13 Berührkontakt

14 Verzahnung

15 Bezugsachse

16 Bezugsachse

17 Gegenkontaktzone

18 Gegenkontaktzone

19 Grundkörper einer Schaltgabel

20 Kontaktzone

21 Kontaktzone

22 Kontaktzone

23 Kontaktzone

24    Gleitschuh

25    Grundkörper

26    Zapfen

27    Steckverbindung

28    Vierkantloch

29    Kontaktzone

30    Kontaktzone

31    Bezugsachse

32    geometrische Achse

33    Loch

34    Zapfen

35    Flanke

36    Symmetrieebene

37    Berührkontakt

38    Doppelpfeil

39    Bezugsachse

40    Gleitschutz

41    Ebene

42    Bezugsachse

## Patentansprüche

1.  Schaltvorrichtung (1) mit mindestens einer längsbeweglichen Schiebemuffe (3), mit zumindest einer Schaltgabel (2) sowie mit mindestens einer Kompensationsanordnung, wobei die Schiebemuffe (3) mittels der Schaltgabel (2) zumindest zeitweise in wenigstens eine Längsrichtung verschiebbar ist und dabei die Schaltgabel (2) über Gleitschuhe (5, 24, 40) mit der Schiebemuffe (3) im Berührkontakt (13, 37) steht und wobei die Kompensationsanordnung die Abweichungen eines ersten Abstands zwischen einer zur Längsrichtung senkrecht verlaufenden Bezugsachse (15, 31) der Schaltgabel (2) und zwischen dem zumindest punktförmigen Berührkontakt (13, 37) an der Schiebemuffe (3) von einem Sollwert durch Abstandsausgleich zumindest teilweise kompensiert, **dadurch gekennzeichnet, dass** die Kompensationsanordnung folgende Merkmale aufweist:

    - an dem Gleitschuh sind mindestens eine erste Kontaktzone (20, 22, 29) und eine zweite Kontaktzone (21, 23, 30) für den Berührkontakt (13, 37) geeignet ausgebildet,
    - nur eine der Kontaktzonen (20, 22, 21, 23, 29, 30) ist in der Schaltvorrichtung auf den Berührkontakt (13, 37) in Richtung der Schiebemuffe (3) gerichtet und die andere der Kontaktzonen (20, 22, 21, 23, 29, 30) in eine andere Richtung,
    - die erste Kontaktzone (20, 22, 29) weist, wenn diese in der Schaltvorrichtung auf den Berührkontakt (13, 37) gerichtet ist, einen anderen zweiten Abstand zur Bezugsachse (15, 31) auf als die zweite Kontaktzone (21, 23, 30) einen dritten Abstand zur Bezugsachse (15, 31) aufweist, wenn diese in der Schaltvorrichtung auf den Berührkontakt (13, 37) gerichtet ist,
    - an dem Gleitschuh (24) ist wenigstens noch eine dritte Kontaktzone (29, 30) für einen möglichen Berührkontakt (13, 37) mit der Schiebemuffe (3) ausgebildet, wobei der Abstand der dritten Kontaktzone (29, 30) zur Bezugsachse (15, 31) anders ist, als es der zweite bzw. dritte Abstand ist,
    - der Wert von zumindest einem der Abstände einer der Kontaktzonen, den diese zur Bezugsachse (15, 31) aufweist, wenn diese in der Schaltvorrichtung auf den Berührkontakten (13, 37) gerichtet ist, entspricht dem Sollwert des Abstands inklusive eines Korrekturabstands, wobei der Korrekturabstand eine mögliche Abweichung des ersten Abstands der Bezugsachse (15, 31) zum Berührkontakt (13, 37) vom Sollwert berücksichtigt
    - in der Schaltvorrichtung ist der Gleitschuh so an die Schaltgabel (2) montiert, dass diejenige Kontaktzone auf den Berührkontakt (13, 37) gerichtet ist, in deren Abstand ein Korrekturwert enthalten ist, der der tatsächlichen Abweichung des Abstands der Bezugsachse (15, 31) zum Berührkontakt (13, 37) vom Sollwert am nächsten ist.

2.  Schaltvorrichtung nach Anspruch 1, in der die Differenz aus dem zweiten Abstand und dem dritten Abstand maximal der größten mit der Anordnung auszugleichenden Abweichung des Abstands der Bezugsachse (15, 31) zum Berührkontakt (13, 37) entspricht.

3.  Schaltvorrichtung nach Anspruch 1, in der die erste Kontaktzone (20, 22, 29) zur zweiten Kontaktzone (21, 23, 30) entgegengesetzt ausgerichtet ist.

4.  Schaltvorrichtung nach Anspruch 1, in der die Bezugsachse (15, 31) zwischen den Kontaktzonen verläuft.

**5.** Schaltvorrichtung nach Anspruch 1, in der der Gleitschuh wenigstens mittels einer Steckverbindung (27) an der Schaltgabel (2) gehalten ist, wobei die Steckverbindung aus wenigstens einem Steckglied und aus einer mit dem Steckglied korrespondierenden Aufnahme gebildet ist.

**6.** Schaltvorrichtung nach Anspruch 5, bei der die Steckverbindung symmetrisch gestaltet ist und die Symmetrieachse der Steckverbindung und die Bezugsachse (15, 31, 39) einander identisch sind.

**7.** Schaltvorrichtung nach Anspruch 5, in der das Steckglied zumindest außen zylindrisch und die Aufnahme dazu korrespondierend innenzylindrisch ausgebildet ist.

**8.** Schaltvorrichtung nach Anspruch 5, in der der Querschnitt zur Symmetrieachse des Steckgliedes außen quadratisch und die Aufnahme dazu korrespondierend innen quadratisch ausgebildet ist.

**9.** Verfahren zur Kompensation von Abweichungen der Position der Schaltgabel (2) zur Schiebemuffe (3) von einem Sollwert in einer Schaltvorrichtung nach Anspruch 1, mit folgenden Schritten:

- ermitteln der tatsächlichen Abweichung eines ersten Abstands der Bezugsachse (15, 31) der Schaltgabel (2) zum Berührkontakt (13, 37) an der Schiebemuffe (3) vom Sollwert,
- Auswahl der zur Bestückung der Schaltgabel (2) entsprechenden Anzahl von Gleitschuhen (5, 24, 40), bei denen eine Kontaktzone des an der Schaltgabel (2) befestigten Gleitschuhs (5, 24, 40) einen Abstand der Bezugsachse (15, 31) der Schaltgabel (2) zum Berührkontakt (13, 37) aufweist, in dem derjenige Korrekturwert berücksichtigt ist, der der tatsächlichen Abweichung vom Sollwert des ersten Abstands am nächsten liegt,
- Montage des Gleitschuhs (5, 24, 40) an die Schaltgabel (2) so, dass diejenige Kontaktzone auf den Berührkontakt (13, 37) gerichtet ist, in deren Abstand derjenige Korrekturwert berücksichtigt ist, der der tatsächlichen Abweichung am nächsten liegt.

**Claims**

**1.** Shift device (1) having at least one longitudinally movable sliding sleeve (3), having at least one shift fork (2) and having at least one compensation arrangement, wherein the sliding sleeve (3) can at least intermittently be moved in at least one longitudinal direction by means of the shift fork (2), and here the shift fork (2) is in touching contact (13, 37) with the sliding sleeve (3) via sliding shoes (5, 24, 40), and wherein the compensation arrangement, through spacing compensation, at least partially compensates the deviations of a first spacing between a reference axis (15, 31), which runs perpendicular to the longitudinal direction, of the shift fork (2) and the at least punctiform touching contact (13, 37) on the sliding sleeve (3) from a setpoint value, **characterized in that** the compensation arrangement has the following features:

- on the sliding shoe there are suitably formed at least one first contact zone (20, 22, 29) and one second contact zone (21, 23, 30) for the touching contact (13, 37),
- only one of the contact zones (20, 22, 21, 23, 29, 30) is, in the shift device, directed towards the touching contact (13, 37) in the direction of the sliding sleeve (3), and the other of the contact zones (20, 22, 21, 23, 29, 30) is directed in another direction,
- the first contact zone (20, 22, 29), when in the shift device it is directed towards the touching contact (13, 37), has a second spacing to the reference axis (15, 31) which differs from a third spacing of the second contact zone (21, 23, 30) to the reference axis (15, 31) when in the shift device said second zone is directed towards the touching contact (13, 37),
- on the sliding shoe (24) there is formed at least a further third contact zone (29, 30) for a possible touching contact (13, 37) with the sliding sleeve (3), wherein the spacing of the third contact zone (29, 30) to the reference axis (15, 31) differs from the second and third spacings,
- the value of at least one of the spacings of one of the contact zones to the reference axis (15, 31) when, in the shift device, said contact zone is directed towards the touching contacts (13, 37) corresponds to the setpoint value of the spacing including a corrective spacing, wherein the corrective spacing takes into consideration a possible deviation of the first spacing of the reference axis (15, 31) to the touching contact (13, 37) from the setpoint value,
- in the shift device, the sliding shoe is mounted on the shift fork (2) in such a way that that contact zone whose spacing has contained therein a corrective value closest to the actual deviation of the spacing of the reference axis (15, 31) to the touching contact (13, 37) from the setpoint value is directed towards the touching contact (13, 37).

**2.** Shift device according to Claim 1, in which the difference between the second spacing and the third spacing at a maximum corresponds to the greatest deviation of the spacing of the reference axis (15, 31) to the touching contact (13, 37) to be compensated by means of the arrangement.

3. Shift device according to Claim 1, in which the first contact zone (20, 22, 29) is directed oppositely to the second contact zone (21, 23, 30).

4. Shift device according to Claim 1, in which the reference axis (15, 31) runs between the contact zones.

5. Shift device according to Claim 1, in which the sliding shoe is held on the shift fork (2) at least by means of a plug-in connection (27), wherein the plug-in connection is formed from at least one plug-in element and from a receptacle which corresponds to the plug-in element.

6. Shift device according to Claim 5, in which the plug-in connection is of symmetrical design and the axis of symmetry of the plug-in connection and the reference axis (15, 31, 39) are identical to one another.

7. Shift device according to Claim 5, in which the plug-in element is of at least externally cylindrical design, and the receptacle, correspondingly thereto, is of internally cylindrical design.

8. Shift device according to Claim 5, in which the cross section with respect to the axis of symmetry of the plug-in element is of externally square design, and the receptacle, correspondingly thereto, is of internally square design.

9. Method for compensating deviations of the position of the shift fork (2) with respect to the sliding sleeve (3) from a setpoint value in a shift device according to Claim 1, having the following steps:

- determining the actual deviation of a first spacing of the reference axis (15, 31) of the shift fork (2) to the touching contact (13, 37) on the sliding sleeve (3) from the setpoint value,
- selecting the corresponding number of sliding shoes (5, 24, 40), with which the shift fork (2) is to be equipped, in the case of which a contact zone of the sliding shoe (5, 24, 40) fastened to the shift fork (2) has a spacing of the reference axis (15, 31) of the shift fork (2) to the touching contact (13, 37), in which spacing is taken into consideration that corrective value which is closest to the actual deviation from the setpoint value of the first spacing,
- mounting the sliding shoe (5, 24, 40) on the shift fork (2) such that that contact zone whose spacing has taken into consideration therein that corrective value which is closest to the actual deviation is directed towards the touching contact (13, 37).

**Revendications**

1. Dispositif de changement de vitesse (1) avec au moins un manchon extérieur (3) longitudinalement mobile, avec au moins une fourchette de sélection (2) ainsi qu'avec au moins un système de compensation, dans lequel le manchon extérieur (3) peut être déplacé au moyen de la fourchette de sélection (2) au moins temporairement dans au moins une direction longitudinale et la fourchette de sélection (2) est en l'occurrence en contact direct (13, 37) avec le manchon extérieur (3) au moyen de patins de guidage (5, 24, 40) et dans lequel le système de compensation compense au moins en partie les écarts d'une première distance entre un axe de référence (15, 31) de la fourchette de sélection (2) s'étendant perpendiculairement à la direction longitudinale et le contact direct au moins ponctuel (13, 37) sur le manchon extérieur (3) par rapport à une valeur de consigne au moyen d'une compensation de distance, **caractérisé en ce que** le système de compensation présente les caractéristiques suivantes:

- sur le patin de guidage, il se trouve au moins une première zone de contact (20, 22, 29) et une deuxième zone de contact (21, 23, 30) convenant pour le contact direct (13, 37),
- seule une des zones de contact (20, 22, 21, 23, 29, 30) est orientée dans le dispositif de changement de vitesse vers le contact direct (13, 37) en direction du manchon extérieur (3) et l'autre des zones de contact (20, 22, 21, 23, 29, 30) est orientée dans une autre direction,
- la première zone de contact (20, 22, 29) présente, lorsque celle-ci est orientée dans le dispositif de changement de vitesse vers le contact direct (13, 37), une deuxième distance à l'axe de référence (15, 31) autre qu'une troisième distance que présente la deuxième zone de contact (21, 23, 30) par rapport à l'axe de référence (15, 31) lorsque celle-ci est orientée dans le dispositif de changement de vitesse vers le contact direct (13, 37),
- sur le patin de guidage (24), il se trouve encore au moins une troisième zone de contact (29, 30) pour un contact direct éventuel (13, 37) avec le manchon extérieur (3), dans lequel la distance de la troisième zone de contact (29, 30) à l'axe de référence (15, 31) est différente de la deuxième ou de la troisième distance,
- la valeur d'au moins une des distances d'une des zones de contact, que celle-ci présente par rapport à l'axe de référence (15, 31), lorsque celle-ci est orientée vers le contact direct (13, 37) dans le dispositif de changement de vitesse, correspond à la valeur de consigne de la distance, y compris d'une distance de correction, dans lequel la distance de correction tient compte d'un écart éventuel de la première distance de l'axe de référence (15, 31) au contact direct (13, 37) par rapport à la valeur de consigne,
- dans le dispositif de changement de vitesse, le patin de guidage est monté sur la fourchette de sélection (2) de telle manière que la zone de contact soit orientée vers le contact direct (13, 37) avec une distance contenant une valeur de correction, qui est la plus proche de l'écart réel de la distance de l'axe de référence (15, 31) au contact direct (13, 37) par rapport à la valeur de consigne.

2. Dispositif de changement de vitesse selon la revendication 1, dans lequel la différence entre la deuxième distance et la troisième distance correspond au maximum au plus grand écart de la distance de l'axe de référence (15, 31) au contact direct (13, 37) à compenser avec le système.

3. Dispositif de changement de vitesse selon la revendication 1, dans lequel la première zone de contact (20, 22, 29) est orientée à l'opposé de la deuxième zone de contact (21, 23, 30).

4. Dispositif de changement de vitesse selon la revendication 1, dans lequel l'axe de référence (15, 31) s'étend entre les zones de contact.

5. Dispositif de changement de vitesse selon la revendication 1, dans lequel le patin de guidage est maintenu sur la fourchette de sélection (2) au moyen d'au moins un assemblage à broche (27), dans lequel l'assemblage à broche est formé d'au moins un élément de broche et d'un logement correspondant à l'élément de broche.

6. Dispositif de changement de vitesse selon la revendication 5, dans lequel l'assemblage à broche est réalisé de façon symétrique et l'axe de symétrie de l'assemblage à broche et l'axe de référence (15, 31, 39) sont identiques l'un à l'autre.

7. Dispositif de changement de vitesse selon la revendication 5, dans lequel l'élément de broche est cylindrique au moins extérieurement et le logement présente une forme intérieure cylindrique qui lui correspond.

8. Dispositif de changement de vitesse selon la revendication 5, dans lequel la section transversale par rapport à l'axe de symétrie de l'élément de broche est extérieurement carrée et le logement présente une forme intérieure carrée qui lui correspond.

9. Procédé pour la compensation d'écarts de position de la fourchette de sélection (2) à l'égard du manchon extérieur (3) par rapport à une valeur de consigne dans un dispositif de commande selon la revendication 1, comportant les étapes suivantes:

- déterminer l'écart réel d'une première distance de l'axe de référence (15, 31) de la fourchette de sélection (3) au contact direct (13, 37) sur le manchon extérieur (2) par rapport à la valeur de consigne,
- sélectionner le nombre de patins de guidage (5, 24, 40) correspondant pour l'équipement de la fourchette de sélection (2), pour lesquels une zone de contact du patin de guidage (5, 24, 40) fixé sur la fourchette de sélection (2) présente une distance de l'axe de référence (15, 31) de la fourchette de sélection (2) au contact direct (13, 37), dans lequel on tient compte de la valeur de correction qui est la plus proche de l'écart réel par rapport à la valeur de consigne de la première distance,
- monter le patin de guidage (5, 24, 40) sur la fourchette de sélection (2), de telle manière que la zone de contact, dont la distance tient compte de la valeur de correction qui est la plus proche de l'écart réel, soit orientée vers le contact direct (13, 37).

**Fig. 1**

**Fig. 1a**

**Fig. 2**

EP 2 274 540 B1

EP 2 274 540 B1

**Fig. 3**

**Fig. 4**

13

**Fig. 5**

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10356727 A1
- DE 2127363 A1
- FR 1482014
- DE 10126438 A1
- WO 2009015936 A